# EUROPEAN PATENT APPLICATION

(11) **EP 3 153 990 A1**
(43) Date of publication of application: **12.04.2017**
(21) Application number: 16191560.8
(22) Date of filing: 29.09.2016
(51) Int. Cl.: G06K 9/00, G06K 9/32

(54) **DISPLAY CONTROL APPARATUS, DISPLAY CONTROL METHOD, AND PROGRAM**

(30) Priority: 07.10.2015 JP 2015199632
(71) Applicant: Canon Kabushiki Kaisha, Tokyo 146-8501 (JP)
(72) Inventor: ADACHI, Keiji, Ohta-ku, Tokyo (JP)
(74) Representative: Foxon, Rachel Siobhan

(57) **Abstract**

A display control apparatus includes obtaining means (210) configured to obtain direction information indicating an imaging direction of an imaging apparatus, determination means (209) configured to determine, in an image captured by the imaging apparatus, a specific range suitable for setting as a detection region in which a detection process is to be performed on a specific object in accordance with the direction information, and display control means (211) configured to display an image indicating the specific range on a display screen.

## Description

### BACKGROUND OF THE INVENTION

### Field of the Invention

The present invention relates to a display control apparatus which displays information on an image analysis process, a display control method, and a program.

### Description of the Related Art

In the field of monitoring camera systems, an object detection technique of detecting an object which satisfies a certain condition in an image using an image analysis technique has been used. The object to be detected may be a human body, a face, a license plate of a car, or the like.

In such a monitoring camera system, a certain monitoring region may be monitored from different angles or different fields of view using a plurality of cameras. Japanese Patent No. 5727207 discloses a technique for displaying an image indicating an imaging range of a camera on an image captured by another camera in a superimposing manner so that a user may easily recognize a plurality of imaging ranges of the cameras.

In such an object detection technique, detection rate and detection accuracy vary depending on the angle of imaging of the object serving as the subject.

When the technique disclosed in Japanese Patent No. 5727207 is used, the user may set a camera such that an object to be subjected to analysis processing is included in an imaging range but the user may not check whether the analysis processing is performed appropriately with the given camera setting. Therefore, it is difficult for the user to control the conditions of the cameras and the parameters of the analysis processing so that the analysis processing is performed appropriately.

### SUMMARY OF THE INVENTION

According to a first aspect of the present invention there is provided a display control apparatus as claimed in claims 1 to 7.

According to a second aspect of the present invention there is provided a display control method as claimed in claims 8 to 11.

According to a third aspect of the present invention there is provided a program as claimed in claim 12.

Further features of the present invention will become apparent from the following description of exemplary embodiments with reference to the attached drawings.

### BRIEF DESCRIPTION OF THE DRAWINGS

Fig. 1 is a diagram illustrating a configuration of a network connection of an image processing system.
Fig. 2 is a diagram illustrating a hardware configuration of an imaging apparatus.
Fig. 3 is a block diagram illustrating functions of the imaging apparatus.
Figs. 4A and 4B are diagrams illustrating correspondences between an object and a human body.
Fig. 5 is a diagram illustrating information managed by a locus management unit.
Fig. 6A is a diagram illustrating camera information and Fig. 6B is a diagram illustrating parameters for detection of a human body.
Fig. 7 is a flowchart illustrating an operation of an image processing apparatus.
Fig. 8 is a flowchart illustrating a procedure of a process of calculating a human-body detection available region.
Fig. 9 is a diagram illustrating a method for calculating the human-body detection available region.
Fig. 10 is a diagram illustrating a screen for displaying the human-body detection available region.
Fig. 11 is a diagram illustrating a method for calculating a human-body detection available region.
Fig. 12 is a diagram illustrating a display screen for displaying the human-body detection available region.
Fig. 13 is a diagram illustrating installation states of a plurality of imaging apparatuses.
Figs. 14A and 14B are diagrams illustrating display of a plurality of human-body detection available regions.

### DESCRIPTION OF THE EMBODIMENTS

Hereinafter, embodiments of the present invention will be described in detail with reference to the accompanying drawings.

Note that the embodiments described below are merely examples for realization of the present invention, and may be appropriately modified or changed depending on a configuration of an apparatus to which the present invention is applied or various conditions, that is, the present invention is not limited to the embodiments below. Each of the embodiments of the present invention described below can be implemented solely or as a combination of a plurality of the embodiments or features thereof where necessary or where the combination of elements or features from individual embodiments in a single embodiment is beneficial.

### First Embodiment

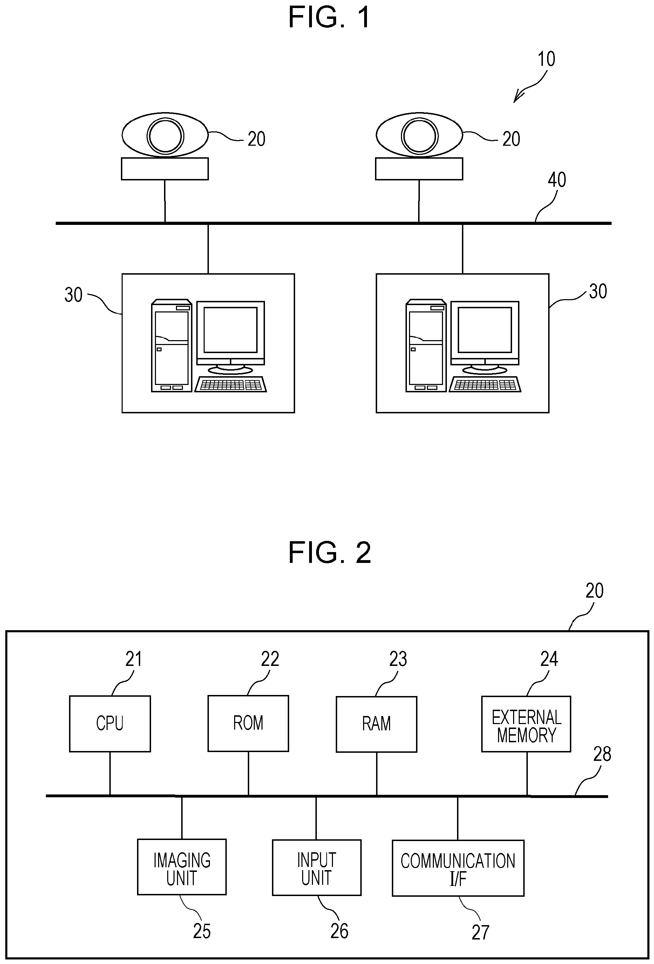

Fig. 1 is a diagram illustrating a configuration of a network connection in an operation environment of an image processing system according to a first embodiment.
In this embodiment, the image processing system is applied to a network camera system.

A network camera system 10 includes at least one network camera (hereinafter simply referred to as a "camera" where appropriate) 20 and at least one information processing apparatus 30. The camera 20 and the information processing apparatus 30 are connected to each other through a local area network (LAN) 40 serving as a network line. The network line is not limited to the LAN, and may be the Internet, a wide area network (WAN), or the like. Furthermore, a form of the physical connection to the LAN 40 may be a wired connection or a wireless connection. Although two cameras 20 and two information processing apparatuses 30 are connected to the LAN 40 in Fig. 1, the number of the cameras 20 and the number of the information processing apparatuses 30 are not limited to the numbers illustrated in Fig. 1. The camera 20 of this embodiment functions as an image processing apparatus which performs an analysis process on an object included in an image.

The camera 20 is an imaging apparatus, such as a monitoring camera, which has a tilting function of controlling a tilting angle which is an angle relative to a horizontal plane (hereinafter referred to as a horizontal angle), such as an elevation angle or a depression angle, and which captures an image of a subject in a certain angle of view. The camera 20 has various detection functions, such as a moving-object detection function, a human-body detection function, and a face detection function, for detecting a specific object which satisfies a predetermined condition in an image. These detection functions may be realized by the image processing apparatus.

The image processing apparatus may perform a detection process using one of the detection functions on an image as an analysis process, and transmit a result of the process with the image to the information processing apparatus 30 through the LAN 40. Furthermore, the camera 20 has a function of changing a setting of focus and the like and an angle of view in response to external communication. Note that the camera 20 may be a fisheye camera, a multiple camera, or the like.

The information processing apparatus 30 is a personal computer (PC), for example, which may be operated by a user (an observer, for example). The information processing apparatus 30 also functions as a display device having a display function of displaying an image delivered from the camera 20 and a result of the detection process. The information processing apparatus 30 further has an input function for performing various operations including a parameter setting associated with the detection process executed by the camera 20.

As described above, the image processing system includes the imaging apparatus, the image processing apparatus which is connected to the imaging apparatus in a communication available manner, and the display device connected to the image processing apparatus in a communication available manner.

Fig. 2 is a diagram illustrating a hardware configuration of the camera 20. The camera 20 includes a central processing unit (CPU) 21, a read only memory (ROM) 22, a random access memory (RAM) 23, an external memory 24, an imaging unit 25, an input unit 26, a communication interface (I/F) 27, and a system bus 28.

The CPU 21 integrally controls operations of the camera 20 and controls the various components (22 to 27) through the system bus 28. The ROM 22 is a nonvolatile memory which stores programs required for processes performed by the CPU 21. Note that the programs may be stored in the external memory 24 or a detachable storage medium (not illustrated). The RAM 23 functions as a main memory and a work area of the CPU 21. Specifically, the CPU 21 loads programs required for executing processes from the ROM 22 into the RAM 23 and executes the loaded programs so as to realize various functional operations.

The external memory 24 stores various data and various information required for process performed by the CPU 21 in accordance with programs. Furthermore, the external memory 24 stores various data and various information obtained when the CPU 21 executes the processes using the programs. The imaging unit 25 is used to capture an image of a subject and includes an imaging element, such as a complementary metal oxide semiconductor (CMOS) sensor or a charge coupled device (CCD) sensor. The input unit 26 includes various setting buttons and a power button, and the user of the camera 20 may issue an instruction to the camera 20 through the input unit 26. The communication I/F 27 is used to communicate with an external apparatus (the information processing apparatus 30 in this embodiment). The communication I/F 27 is a LAN interface, for example. The system bus 28 connects the CPU 21, the ROM 22, the RAM 23, the external memory 24, the imaging unit 25, the input unit 26, and the communication I/F 27 to one another in a communication available manner.

Note that the information processing apparatus 30 includes a display unit constituted by a monitor, such as a liquid crystal display (LCD), as a hardware configuration. The information processing apparatus 30 further includes a pointing device, such as a keyboard and a mouse, as the input unit 26, which is used by a user of the information processing apparatus 30 to issue an instruction to the information processing apparatus 30. If the information processing apparatus 30 does not have the imaging function, the imaging unit 25 may be eliminated.

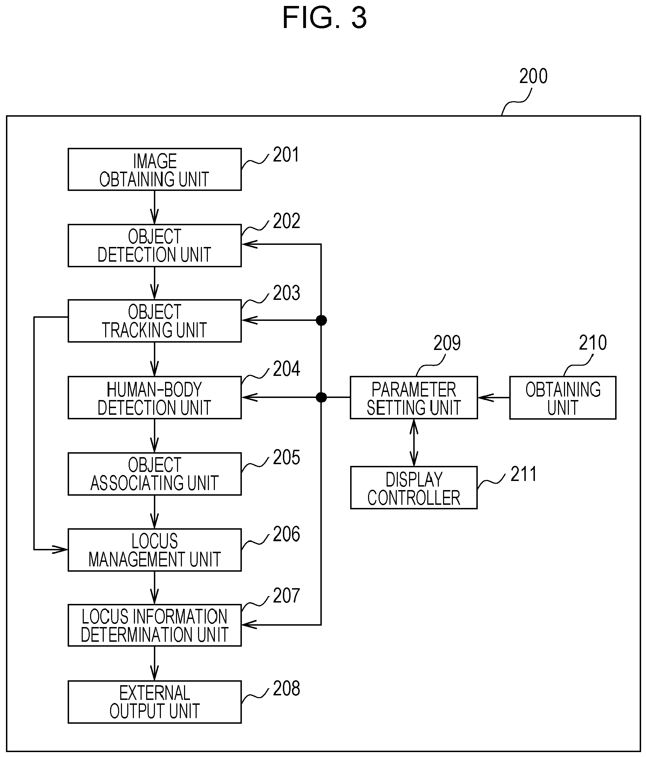

Fig. 3 is a block diagram illustrating functions of an image processing apparatus 200. Although the case where the camera 20 functions as the image processing apparatus 200 is described in this embodiment, the information processing apparatus 30 may function as the image processing apparatus 200 or a general PC or other devices may function as the image processing apparatus 200. The image processing apparatus 200 at least has a function of displaying a screen for setting parameters associated with a detection process in a display screen of the display device (the information processing apparatus 30, for example), and performing various settings associated with the detection process when receiving inputs of user's operations.

Although the embodiment is applied to the image processing apparatus, the embodiment may be applied to a video processing apparatus since the same processing is performed when video images are obtained and processed one by one.

The image processing apparatus 200 includes an image obtaining unit 201, an object detection unit 202, an object tracking unit 203, a human-body detection unit 204, an object associating unit 205, a locus management unit 206, a locus information determination unit 207, and an external output unit 208. The image processing apparatus 200 further includes a parameter setting unit 209, a parameter obtaining unit (an obtaining unit) 210, and a display controller 211. The image obtaining unit 201 obtains a moving image (a video image) or a still image captured by an internal imaging sensor (the imaging unit 25), and transmits the obtained moving image or the obtained still image to the object detection unit 202. Note that the image may be externally supplied. When obtaining a moving image, the image obtaining unit 201 successively supplies frames of the obtained moving image to the object detection unit 202. When obtaining a still image, the image obtaining unit 201 supplies the obtained still image to the object detection unit 202. Note that a supplying source of the moving image or the still image is not particularly limited, and a server apparatus or an imaging apparatus which supplies a moving image or a still image in a wired manner or a wireless manner may be the supplying source. Furthermore, the image obtaining unit 201 may obtain a moving image or a still image from a memory (such as the external memory 24). In a description below, a case where the image obtaining unit 201 supplies a single image to the object detection unit 202 in both of the case where the image obtaining unit 201 obtains a moving image and the case where the image obtaining unit 201 obtains a still image is described. In the former case, the single image corresponds to one of the frames constituting the moving image, whereas in the latter case, the single image corresponds to the still image.

The object detection unit 202 detects a specific object in an image obtained from the image obtaining unit 201 in accordance with a background difference method. Information on the detected object includes positional information of the object in the image, information on a circumscribed rectangle of the object, and information on a size of the object. A region to be subjected to the object detection process performed by the object detection unit 202 (an object detection process region) is set by the parameter setting unit 209. For simplicity of the description, the object detection process region corresponds to an entire region of the image. Although the object detection unit 202 performs a process of detecting an object in an image, a method for the process is not limited to a particular method, such as the background difference method, as long as the method performs a similar process.

When detecting, in a target image, an object detected by the object detection unit 202 in a preceding image of the target image, the object tracking unit 203 associates the objects in the individual images with each other. It is assumed that the object tracking unit 203 assigns an object ID of A to the object detected by the object detection unit 202 in the preceding image of the target image. If the object detection unit 202 detects the object also in the target image, the object tracking unit 203 also assigns the object ID of A to the object. In this way, if the object detection unit 202 detects the same object in a plurality of consecutive images, the object tracking unit 203 assigns the same object ID to the objects in the different images. Note that the object tracking unit 203 assigns a new object ID to an object newly detected in the target image. As with the object detection process region described above, a region subjected to an object tracking process performed by the object detection unit 203 (an object tracking process region) is set by the parameter setting unit 209.

The object tracking unit 203 employs, as a method for determining that objects in a plurality of consecutive images are the same object, a method for determining that objects which are within a certain distance from movement prediction positions of the object obtained using movement vectors of the detected objects are the same object. Furthermore, the object tracking unit 203 may employ a method for associating objects of high correlation in consecutive images with one another based on a color, a shape, and a size (an area) of the objects. Although the object tracking unit 203 determines that objects in a plurality of consecutive images are the same object and performs a tracking process, a method for the process is not limited to a particular method as long as the method performs a similar process.

The human-body detection unit 204 detects a human body by performing a human-body detection process as an analysis process on a human-body detection process region set by the parameter setting unit 209 using a collation pattern dictionary or the like stored in advance. Here, the human-body detection unit 204 has a function of detecting a human body in an image, and the human-body detection process is not limited to the pattern process.

Furthermore, the analysis process is not limited to the human-body detection process. The analysis process may be a face detection process of detecting an edge, such as an eye or a mouth, so as to detect a feature portion of a human face or a face recognition process of extracting feature information to be used for personal recognition from a detected face region and performing face recognition in accordance with the extracted feature information. Furthermore, a detection target is not limited to a human body. The detection target may be a vehicle, an animal, characters of a license plate, or the like. In a case where the detection target is other than a human body, the analysis process described above may be a feature value detection process of detecting a feature value (a license plate in a case of a vehicle, for example) of the detection target. A plurality of types of objects may be set as detection targets. Note that the object detection process region of the object detection unit 202 and the object tracking process region of the object tracking unit 203 may be the same as the human-body detection process region of the human-body detection unit 204.

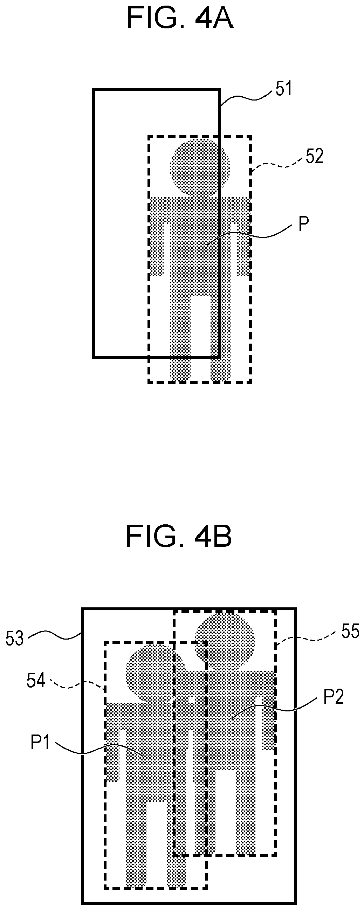

The object associating unit 205 associates an object detected by the object detection unit 202 with a human body detected by the human-body detection unit 204. An example of the association between an object and a human body will be described with reference to Figs. 4A and 4B. Fig. 4A is a diagram illustrating a case where a circumscribed rectangle 51 of an object detected by the object detection unit 202 does not incorporate a circumscribed rectangle 52 of a human body P detected by the human-body detection unit 204. In this case, the association is performed in a case where an overlapping rate of the human-body circumscribed rectangle 52 to the object circumscribed rectangle 51 exceeds a preset threshold value. Here, the overlapping rate indicates a rate of an area of a portion in which the object circumscribed rectangle 51 overlaps with the human-body circumscribed rectangle 52 to an area of the human-body circumscribed rectangle 52. On the other hand, Fig. 4B is a diagram illustrating a case where a plurality of human bodies P1 and P2 are detected in an object circumscribed rectangle 53 detected by the object detection unit 202. In this case, the association is performed in a case where overlapping rates of a circumscribed rectangle 54 of the human body P1 and a circumscribed rectangle 55 of the human body P2 to the object circumscribed rectangle 53 individually exceed a preset threshold value.

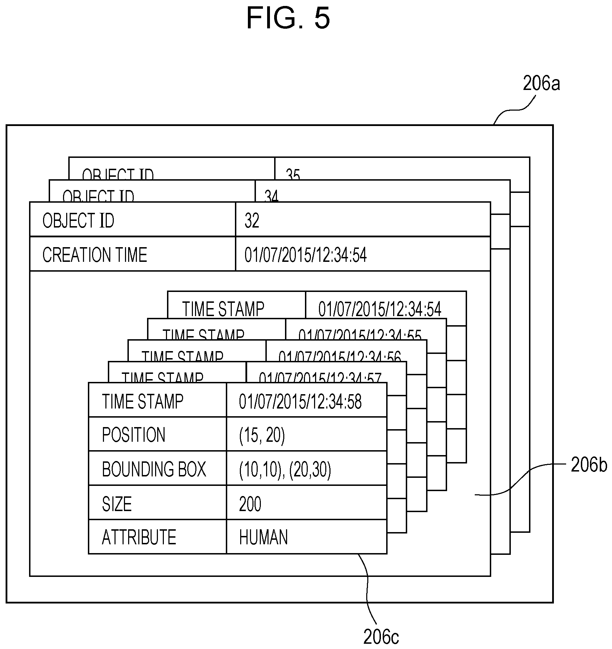

The locus management unit 206 manages information on an object obtained by the object detection unit 202 and the object tracking unit 203 as management information (locus information) for each object. An example of the locus information managed by the locus management unit 206 will now be described with reference to Fig. 5. Locus information 206a includes object information 206b for each object ID. The object information 206b for one object includes information 206c for each image in which the object is detected. The information 206c includes a time stamp (TIME STAMP) indicating a date and time of generation of the information 206c and a coordinate position (POSITION) of the detected object. The information 206c further includes information for defining a circumscribed rectangle of a region of the detected object (BOUNDING BOX), a size of the object (SIZE), and an attribute of the object (ATTRIBUTE). The information included in the information 206c is not limited to the information illustrated in Fig. 5, and any information may be included. The locus information 206a managed by the locus management unit 206 is used by the locus information determination unit 207 described below.

The locus management unit 206 updates the attribute of the object (ATTRIBUTE) in accordance with a result of the association performed by the object associating unit 205. The locus management unit 206 may update attributes of previous objects (ATTRIBUTES) in accordance with results of the association. Furthermore, the locus management unit 206 may update attributes of succeeding objects (ATTRIBUTES) in accordance with results of the association. By performing this process, results of tracking on objects having the same object ID may have the same attribute at any time point.

The locus information determination unit 207 has a function of an object passing detection unit which performs a passing determination process in accordance with a determination parameter set by the parameter setting unit 209 and the locus information 206a managed by the locus management unit 206. Here, the passing determination process determines whether an object included in an image has passed an object detection line set in the image.

The locus information determination unit 207 calculates a movement vector to a circumscribed rectangle of a human-body attribute object (which is an object having an attribute of a human body) in a target image from a circumscribed rectangle of a human-body attribute object of a preceding image of the target image. Then the locus information determination unit 207 determines whether the calculated movement vector intersects with a line (a detection line) defined by the parameter setting unit 209. The determination of the intersection corresponds to a determination as to whether the human-body attribute object has passed the set line. A result of the determination performed by the locus information determination unit 207 is output to a display unit of the information processing apparatus 30 through the external output unit 208. Furthermore, in a case where the external output unit 208 has a function of the display unit constituted by a CRT or an LCD, the determination result may be displayed using the external output unit 208 instead of the display unit of the information processing apparatus 30. Although the case where the locus information determination process performed by the locus information determination unit 207 corresponds to the passing determination process has been described in this embodiment, any determination process may be performed as long as a determination parameter and locus information are used.

The parameter setting unit 209 functions as a setting application which performs settings associated with the detection process performed by the image processing apparatus 200 and sets parameters for the object detection unit 202, the object tracking unit 203, the human-body detection unit 204, and the locus information determination unit 207. The parameters may be set using a user interface of the information processing apparatus 30.

The parameter setting unit 209 sets the human-body detection process region described above as a parameter to be used in a human-body detection process performed by the human-body detection unit 204. In this embodiment, the parameter setting unit 209 calculates a human-body detection available region in which the human-body detection process may be performed in the image in accordance with the information input from the parameter obtaining unit 210. Then the parameter setting unit 209 outputs the calculated human-body detection available region to the display controller 211. Here, the user may specify a region to be actually subjected to the human-body detection process in the human-body detection available region displayed in the display unit by the display controller 211 using a mouse or the like. The parameter setting unit 209 obtains the region specified by the user and sets the obtained region as the human-body detection process region to the human-body detection unit 204. The process of calculating the human-body detection available region will be described in detail later.

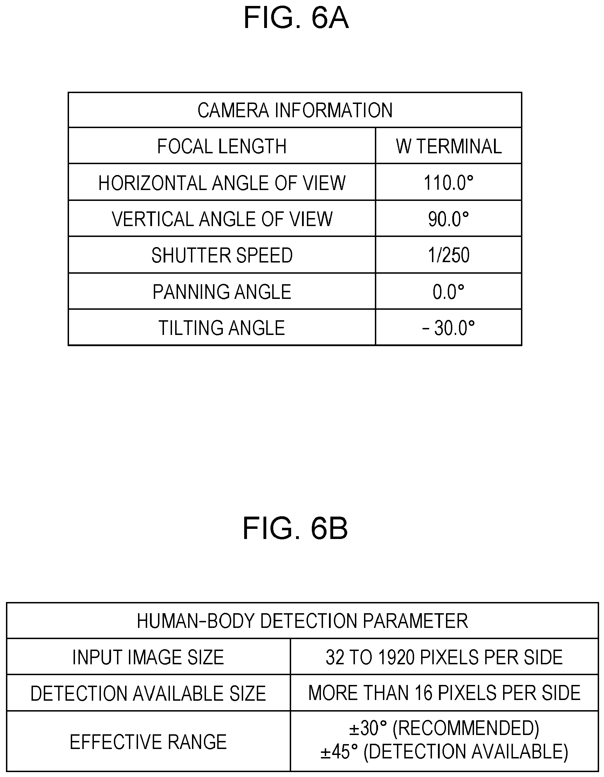

The obtaining unit 210 obtains camera information and human-body detection parameters. The camera information is a fixed value or a current value of a camera parameter, and includes a focal length, a horizontal angle of view, a vertical angle of view, a shutter speed, a panning angle, and a tilting angle as illustrated in Fig. 6A. In this embodiment, the parameter obtaining unit 210 obtains information on an imaging range of the imaging apparatus which captures an image to be subjected to the analysis process as the camera information and outputs the obtained information to the parameter setting unit 209. Here, the information on the imaging range indicates an imaging direction and an imaging angle of view. In this embodiment, an imaging direction which is a vertical direction and information on an imaging angle of view are used as the information on the imaging range. Specifically, assuming that an orientation of the camera 20 is horizontal, a tilting angle is used as information indicating an imaging direction which is a vertical direction of the camera 20 in this embodiment. Specifically, the parameter obtaining unit 210 outputs the tilting angle and the vertical angle of view to the parameter setting unit 209.

Note that the information indicating the imaging direction of the camera 20 is not limited to the tilting angle, and may be an installation angle of the camera 20 or a combination of the tilting angle and the installation angle. The installation angle of the camera 20 may be obtained using an angle sensor, not illustrated, incorporated in the camera 20. However, a method of the obtainment is not limited to the method described above as long as angle information is obtained. For example, as a method for detecting the installation angle of the camera 20, a detection method using a gyro sensor, a method for obtaining the installation angle by video analysis after estimating a floor surface in a captured image, or a method for obtaining the installation angle by manually inputting an angle by the user may be used.

Furthermore, the human-body detection parameters include an input image size, a detection available size, and an effective range as illustrated in Fig. 6B. In the effective range, accuracy of the human-body detection process which is the analysis process is ensured. In Fig. 6B, as information on the effective range, two patterns including a recommendation range which is an angle range in which human-body detection accuracy is ensured in a certain rate or more and a detection available range which is an angle range in which a human body may be detected to some degree which is less than the certain rate are set. The recommendation range is an angle range of ±30° relative to a horizontal plane and the detection available range is an angle range of ±45° relative to the horizontal plane. Note that the effective range is not limited to the two patterns described above, and three patterns or more may be set as the effective range. For example, the effective range may include the recommendation range of ±30°, a quasi-recommendation range of ±40°, and the detection available range of ±45°. The obtaining unit 210 outputs the effective range in the human-body detection parameters to the parameter setting unit 209.

Specifically, the parameter setting unit 209 inputs the tilting angle, the vertical angle of view, and the effective range of the human-body detection process and calculates the human-body detection available region using the information.

The display controller 211 overlaps the human-body detection available region calculated by the parameter setting unit 209 on the image obtained by the image obtaining unit 201 and displays the region in the display unit of the information processing apparatus 30. Furthermore, the display controller 211 displays the user interface to be used by the user to instruct various settings in the display unit of the information processing apparatus 30 and receives an instruction issued by the user through the user interface. When receiving information on the human-body detection process region through the user interface, for example, the display controller 211 outputs the received information to the parameter setting unit 209.

As described above, the user may specify the human-body detection process region after checking the human-body detection available region displayed in the display unit. Therefore, the human-body detection process region is prevented from being set in a human-body detection unavailable region in which accuracy of the human-body detection process is not ensured. Furthermore, the user may control an imaging condition of the camera 20 while checking the human-body detection available region displayed in the display unit, and therefore, the human-body detection region may be set such that the human-body detection process desired by the user is performed. In this way, the user may efficiently perform the settings associated with the human-body detection process.

The functions of the units included in the image processing apparatus 200 of Fig. 3 may be realized when the CPU 21 of Fig. 2 executes programs. However, at least some of the units included in the image processing apparatus 200 of Fig. 3 may operate as dedicated hardware. In this case, the dedicated hardware operates under control of the CPU 21.

Note that, as described above, the information processing apparatus 30, a general PC, or other apparatuses may function as the image processing apparatus 200. In this case, an apparatus functioning as the image processing apparatus 200 at least includes functions (209 to 211) of the various units which realize the calculation of the human-body detection available region and the display control. Specifically, the functions of the various units (201 to 208) which realize the various detection processes (including the analysis process) may be included in the camera 20.

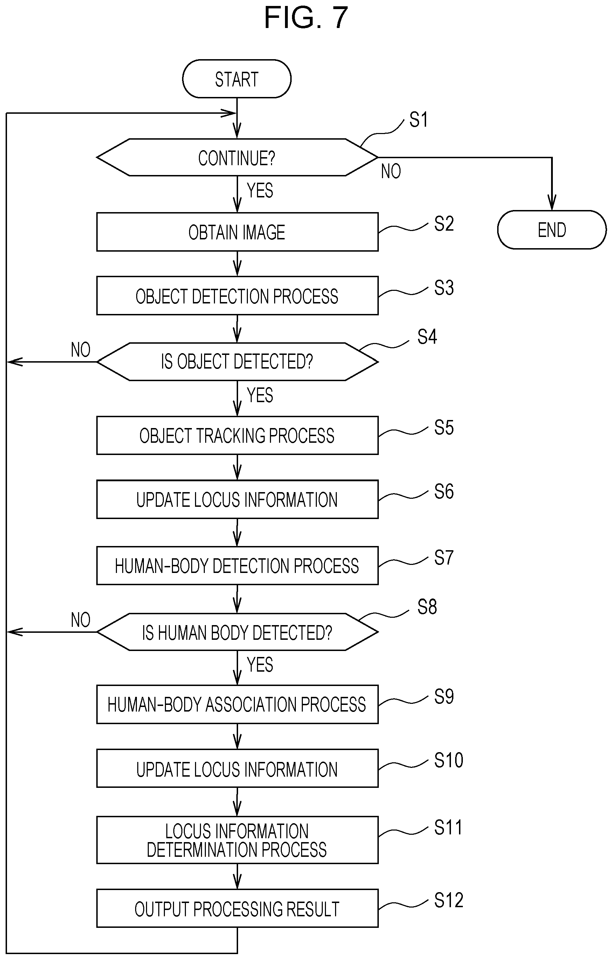

Next, the operation of the image processing apparatus 200 will be described with reference to Fig. 7. A process in Fig. 7 is started in response to an instruction input of the user, for example. Note that a start timing of the process of Fig. 7 is not limited to the timing described above. The image processing apparatus 200 realize the processes of the components illustrated in Fig. 3 and the processes of Fig. 7 when the CPU 21 reads and executes required programs. However, as described above, at least some of the components illustrated in Fig. 3 may operate as dedicated hardware. In this case, the dedicated hardware operates under control of the CPU 21.

In step S1, the image processing apparatus 200 determines whether an image process is to be continued. For example, the image processing apparatus 200 determines whether a process is to be continued in accordance with a result of a determination as to whether a process termination instruction is supplied from the user. When it is determined that the process is to be terminated, the image processing apparatus 200 terminates the main process whereas when it is determined that the process is to be continuously performed, the image processing apparatus 200 proceeds to step S2. In step S2, the image obtaining unit 201 obtains an image and the process proceeds to step S3. In step S3, the object detection unit 202 performs the object detection process on the image obtained in step S2. In step S4, the object detection unit 202 determines whether an object has been detected in the object detection process performed in step S3. When the object detection unit 202 determines that any object has not been detected, the process returns to step S1 whereas when the object detection unit 202 determines that an object has been detected, the process proceeds to step S5.

In step S5, the object tracking unit 203 performs the object tracking process. In step S6, the locus management unit 206 updates the locus information 206a in accordance with a result of the object tracking process performed in step S5. In step S7, the human-body detection unit 204 performs the human-body detection process on the region including the object detected in the object detection process performed in step S3 in the human-body detection process region set by the parameter setting unit 209. In step S8, the human-body detection unit 204 determines whether a human body has been detected in the human-body detection process performed in step S7. When the human-body detection unit 204 determines that any human body has not been detected, the process returns to step S1 whereas when the human-body detection unit 204 determines that a human body has been detected, the process proceeds to step S9. In step S9, the object associating unit 205 performs a process of associating the object with the human body. In step S10, the locus management unit 206 updates the locus information 206a in accordance with a result of the associating process performed in step S9. In step S11, the locus information determination unit 207 performs the locus information determination process so as to determine whether the object has passed the detection line. In step S12, the external output unit 208 outputs a result of the locus information determination process to an outside, and the process returns to step S1.

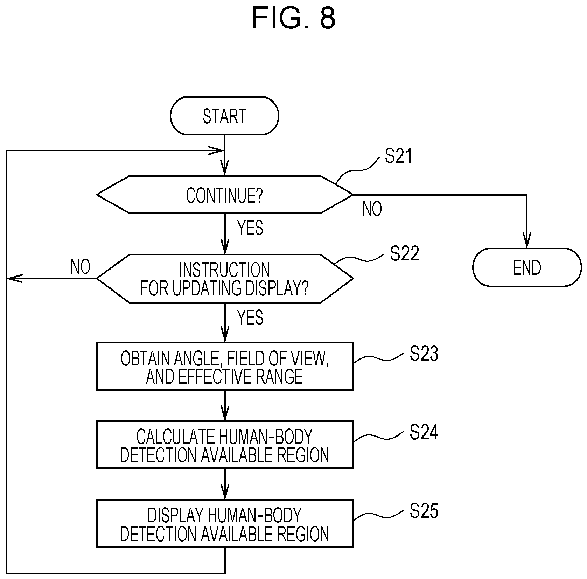

Next, the process of calculating the human-body detection available region executed by the image processing apparatus 200 will be described with reference to Fig. 8. The process in Fig. 8 is started in response to an instruction input by the user, for example. Note that a start timing of the process of Fig. 8 is not limited to the timing described above. The image processing apparatus 200 realizes the processes of the elements illustrated in Fig. 3 and the processes of Fig. 8 when the CPU 21 reads and executes required programs. However, as described above, at least some of the elements illustrated in Fig. 3 may operate as dedicated hardware. In this case, the dedicated hardware operates under control of the CPU 21.

First, in step S21, the image processing apparatus 200 determines whether the process of calculating the human-body detection available region is to be continued. For example, the image processing apparatus 200 determines whether the process is to be continued in accordance with a result of a determination as to whether a process termination instruction has been received from the user. When the image processing apparatus 200 determines that the process is to be terminated, the main process is terminated whereas when the image processing apparatus 200 determines that the process is to be continuously performed, the process proceeds to step S22. In step S22, the image processing apparatus 200 determines whether an instruction for updating display of the human-body detection available region has been issued. For example, the image processing apparatus 200 determines that an instruction for updating display of the human-body detection available region has been issued in a case where an instruction has been issued from a display application of the human-body detection available region immediately after activation or in a case where the tilting angle of the camera 20 is changed. When the image processing apparatus 200 determines that the display updating instruction has not been issued, the process returns to step S21, and otherwise, the process proceeds to step S23.

In step S23, the parameter setting unit 209 obtains the tilting angle which is a horizontal angle of the camera 20, the vertical angle of view of the camera 20, and the effective range of the human-body detection process from the obtaining unit 210, and the process proceeds to step S24. In step S24, the parameter setting unit 209 calculates the human-body detection available region in accordance with the information obtained in step S23, and the process proceeds to step S25. In step S25, the parameter setting unit 209 displays (or updates) the human-body detection available region calculated in step S24 in the display unit of the information processing apparatus 30, and thereafter, the process returns to step S21.

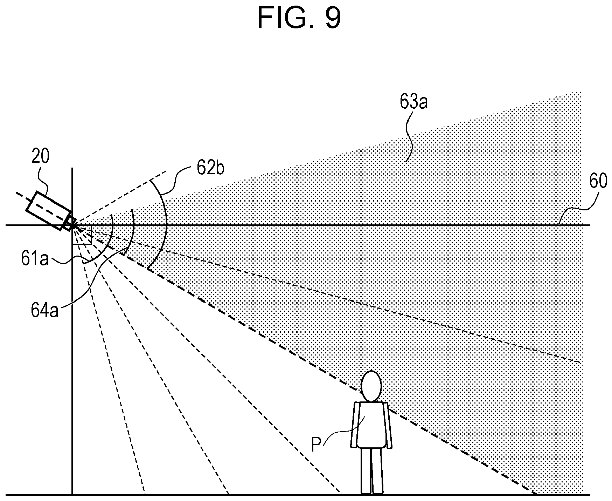

Fig. 9 is a diagram illustrating a method for calculating the human-body detection available region in detail. Fig. 9 is a side view in which the camera 20 installed on a ceiling 60 and the human body P are viewed from a side.

The camera 20 is installed on the ceiling 60 at an angle of depression of 30° and an image is captured in a direction in which the human body P is looked down from the ceiling 60. Specifically, the camera 20 is installed in a position at an angle of elevation of 30° relative to the human body P. Furthermore, as illustrated in Fig. 6A, a vertical angle of view indicating an imaging range in a vertical direction of the camera 20 is 90° and an effective range of the human-body detection process is ±30°. Accordingly, an angle 61a of the imaging range of the camera 20 in the vertical direction is 90°, and an angle 62a of the effective range of the human-body detection process in a vertical direction is 60°. Furthermore, the human-body detection available range in an installation space of the camera 20 corresponding to the human-body detection available region in the image corresponds to the effective range in the imaging range of the camera 20, that is, a range 63a in which the imaging range and the effective range overlap with each other. An angle 64a of the human-body detection available range 63a in a vertical direction is 45°.

As described above, the human-body detection available range 63a may be calculated based on the imaging range of the camera 20 indicated by a horizontal angle (a tilting angle) of the camera 20 and the vertical angle of view of the camera 20 and the effective range of the human-body detection process.

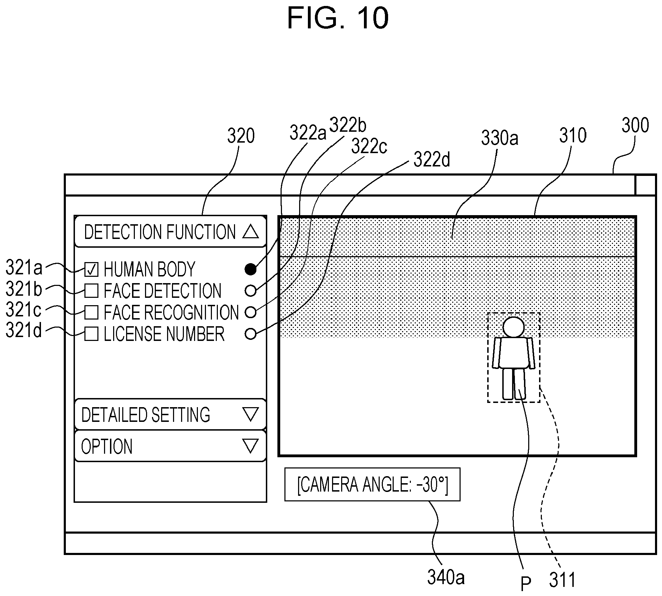

Fig. 10 is a diagram illustrating a presentation screen of the human-body detection available region under the camera installation condition of Fig. 9. A setting screen window 300 of Fig. 10 is a user interface (UI) screen for setting the parameters associated with the detection process to be executed by the image processing apparatus 200. The setting screen window 300 includes a video display section 310 for displaying an image (or a video image) captured by the camera 20 and a setting section 320 for performing settings of the detection process to be performed by the image processing apparatus 200. In the video display section 310, a human-body detection available region 330a corresponding to the human-body detection available range 63a of Fig. 9 is superimposed on an image obtained by capturing the human body P. Furthermore, the setting screen window 300 may include an information display section 340a. In the information display section 340a, horizontal angle information of the camera 20 may be displayed so that a current installation state of the camera 20 is displayed for the user. In Fig. 10, "camera angle: -30°" is displayed as the horizontal angle information.

In the case of the camera installation condition of Fig. 9, an imaging direction of the camera 20 is -30° relative to a horizontal plane, and a rate of the angle 64a of the human-body detection available range 63a relative to the angle 61a in the imaging range is 50%. Specifically, the human-body detection available range 63a corresponds to a range of 50% in an upper portion of the imaging range. Therefore, the region of 50% in the upper portion of the captured image corresponds to the human-body detection available region corresponding to the human-body detection available range 63a. In this case, as illustrated in Fig. 10, a region from a center portion in a vertical direction of the video display section 310 to an uppermost portion of the video display section 310 is displayed as the human-body detection available region 330a.

Furthermore, in the setting section 320, the various detection functions may be enabled or disabled using check boxes 321a to 321d. In Fig. 10, the check box 321a is checked, that is, the human-body detection function is enabled, for example. Furthermore, results of detections of the enabled functions may be displayed using result lamps 322a to 322d in the setting section 320. According to Fig. 10, the human-body detection is successively performed, and face detection, face recognition, and detection of a license plate have not been detected since the detections thereof have not been performed. The detection results of the functions may be also checked using the video display section 310. In the case where the human-body detection is successfully performed, a result of the detection is displayed in the video display section 310 as a human-body frame 311 surrounding the detected human body P as illustrated in Fig. 10. A method for displaying the detection result is not limited to the method described above.

As described above, the parameter setting unit 209 of the image processing apparatus 200 calculates the human-body detection available region 330a in accordance with the tilting angle of the camera 20 which captures an image of the human body P, the vertical angle of view of the camera 20, and the information indicating the effective range which is a human-body detection parameter. Then the display controller 211 superimposes the human-body detection available region 330a calculated by the parameter setting unit 209 on the captured image obtained by the image obtaining unit 201 and displays the human-body detection available region 330a in the video display section 310. In this embodiment, it is assumed that the human body P stands erect in the vertical direction, and a detection rate and detection accuracy of the human body P vary depending on the tilting angle and the vertical angle of view of the camera 20. For example, in a case where a face of a human body is to be detected (recognized), an image captured from the front of the face has the highest accuracy, and the detection accuracy is degraded as an angle of the face in the vertical direction is separated from the front. Therefore, on the assumption described above, the human-body detection available region 330a is determined based on the tilting angle and the vertical angle of view of the camera 20.

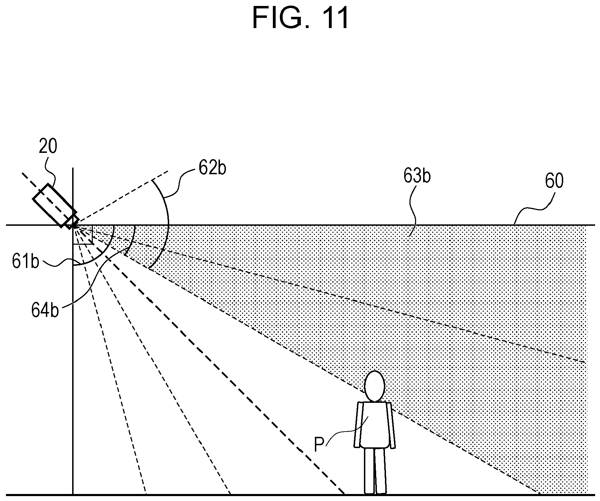

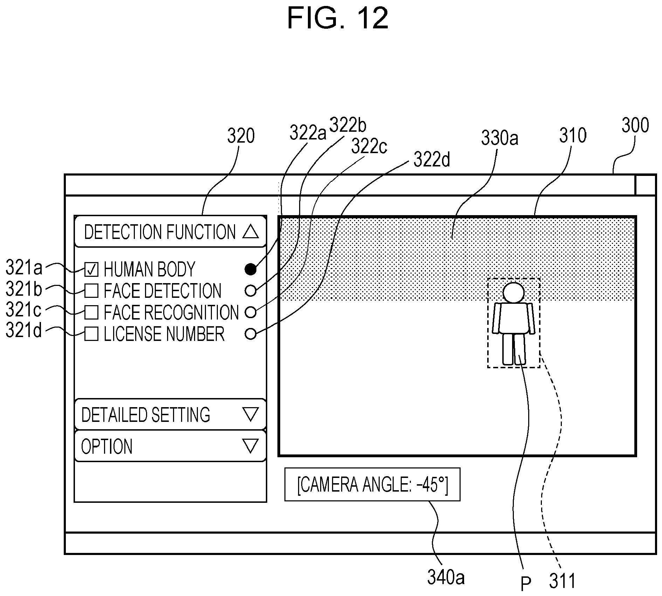

Next, an example of display of the human-body detection available region under a camera installation condition different from that of Fig. 9 will be described with reference to Figs. 11 and 12.

Fig. 11 is a side view in which, as with the case of Fig. 9, the camera 20 installed on the ceiling 60 and the human body P are viewed from a side. The camera 20 is installed on the ceiling 60 at an angle of depression of 45° and an image is captured in a direction in which the human body P is looked down from the ceiling 60. Specifically, the camera 20 is installed in a position at an angle of elevation of 45° relative to the human body P. Furthermore, as illustrated in Fig. 6A, a vertical angle of view indicating an imaging range in a vertical direction of the camera 20 is 90° and an effective range of the human-body detection process is ±30°. Accordingly, an angle 61b in the vertical direction in the imaging range of the camera 20 is 90°, and an angle 62b in a vertical direction of the effective range of the human-body detection process is 60°. Furthermore, the human-body detection available range corresponding to the human-body detection available region corresponds to a range 63b in which the imaging range and the effective range overlap with each other. An angle 64b of the human-body detection available range 63b in a vertical direction is 30°.

Fig. 12 is a diagram illustrating a display screen for displaying the human-body detection available region under the camera installation condition of Fig. 11. In Fig. 12, components the same as those of Fig. 10 are denoted by reference numerals the same as those of Fig. 10 and descriptions thereof are omitted.

In the video display section 310, a human-body detection available region 330b corresponding to the human-body detection available range 63b of Fig. 11 is superimposed on an image obtained by capturing the human body P. Furthermore, "camera angle: -45°" is displayed in an information display section 340b as the horizontal angle information of the camera 20.

In the case of the camera installation condition of Fig. 11, an imaging direction of the camera 20 is -45° relative to a horizontal plane, and a rate of the angle 64b of the human-body detection available range 63b relative to the angle 61b of the imaging range is approximately 30%. Specifically, the human-body detection available range 63b corresponds to a range of approximately 30% in an upper portion of the imaging range. Therefore, the region of approximately 30% in the upper portion of the captured image corresponds to the human-body detection available region corresponding to the human-body detection available range 63b. In this case, as illustrated in Fig. 12, a region of approximately 30% in an upper portion in the video display section 310 is displayed as the human-body detection available region 330b.

Note that, according to this embodiment, the parameter obtaining unit 210 obtains information on the horizontal angle (the tilting angle) of the camera 20, information on the vertical angle of view of the camera 20, and information on the effective range of the human-body detection process. However, the parameter setting unit 209 at least obtains information equivalent to the information described above. For example, the image processing apparatus 200 may read the effective range of the human-body detection process from the information processing apparatus 30 connected to the camera 20 or may read a file including a definition value of the effective range described therein. Furthermore, the camera 20 may receive information on the effective range through a network.

Furthermore, in this embodiment, in a case where the tilting angle of the camera 20 is operated, display of the human-body detection available region in the video display section 310 may be dynamically changed. Moreover, in this embodiment, in a case where a plurality of angle ranges which have different detection accuracies are set as the effective range of the human-body detection process, a plurality of human-body detection available ranges corresponding to the plurality of detection accuracies may be displayed in a divided manner or in a superimposing manner. Although the human-body detection process has been described as the analysis process in this embodiment, any detection function may be employed as long as detection accuracy varies depending on an angle of capturing of a detection target. For example, a face detection process, a face recognition process, a license plate detection process, or higher-order analysis, such as mixed detection in which the face detection process, the face recognition process, and the license plate detection process are combined with one another, may be employed. Although the case where only the human-body detection available region associated with the human-body detection process is superimposed on the captured image has been described, a detection available region of other detection function may be additionally displayed.

As described above, in this embodiment, the image processing apparatus 200 obtains at least information on an imaging direction of a first imaging apparatus, and calculates a first region in which an analysis process may be performed on an object included in an image captured by the first imaging apparatus in accordance with the obtained information. Thereafter, the image processing apparatus 200 displays the obtained first region in the display device. Here, the analysis process may be the human-body detection process, and the first region may be the human-body detection available region. In this way, the image processing apparatus 200 visualizes the human-body detection available region in which the human-body detection process may be performed in an image so as to display the region for the user.

Furthermore, the image processing apparatus 200 displays the first region in a state in which the first region is superimposed on the image captured by the camera 20. Therefore, the user may easily recognize the human-body detection available region in the captured image. Accordingly, the user may easily perform settings for appropriately performing the analysis process (the human-body detection process). A method for displaying the first region is not limited to the method of superimposed display on a captured image, and any method may be employed as long as the user may recognize the first region in the image.

Furthermore, the image processing apparatus 200 obtains the information on the imaging range of the imaging apparatus which captures the image to be subjected to the analysis process. Furthermore, the image processing apparatus 200 obtains information on the effective range in which accuracy of the analysis process is ensured. Then the image processing apparatus 200 obtains the first region based on the information on the imaging range and the information on the effective range. In this embodiment, the information on the imaging range indicates an imaging direction and an imaging angle of view. Here, the horizontal angle of the camera 20 may be used as the imaging direction, and the vertical angle of view may be used as the imaging angle of view. More specifically, the tilting angle of the camera 20 may be used as the horizontal angle of the camera 20. Furthermore, the effective range is an accuracy ensured range in which accuracy of the analysis process is ensured, and angle range information using a position of the camera 20 as a reference may be used as the information on the effective range. In this way, the image processing apparatus 200 calculates the human-body detection available region in accordance with the horizontal angle (the tilting angle) of the camera 20, a vertical angle of view, and the effective range of the human-body detection process, and therefore, the image processing apparatus 200 may appropriately display the human-body detection available range for the user.

Furthermore, the image processing apparatus 200 obtains information on a plurality of effective ranges having different ensuring accuracies of the analysis process and obtains a plurality of first regions corresponding to the plurality of effective ranges. Specifically, the image processing apparatus 200 obtains, as information on the effective ranges, a recommendation range which is an angle range in which human-body detection accuracy of a certain rate or more is ensured and a detection available range which is an angle range in which a human body may be detected to some degree which is less than the certain rate. Accordingly, the image processing apparatus 200 may display the human-body detection available regions for individual accuracies for the user.

The image processing apparatus 200 may display the plurality of first regions for the individual accuracies of the analysis process in a divided manner, for example. Specifically, the image processing apparatus 200 may display a first region (a specific range) having accuracy of the analysis process which is equal to or larger than a first threshold value (a predetermined rate) and a first region (a quasi-specific range) having accuracy of the analysis process which is equal to or larger than a second threshold value which is smaller than the first threshold value in different display forms. Here, the term "display forms" indicates colors indicating the specific range and the quasi-specific range, types and thicknesses of frame lines indicating the specific range and the quasi-specific range, or the like. In this case, the user may easily recognize a difference between human-body detection available regions caused by different human-body detection accuracies. Furthermore, the image processing apparatus 200 may display the plurality of first regions for the individual accuracies of the analysis process in a combined manner. Specifically, the image processing apparatus 200 may display the first region (the specific range) having the accuracy of the analysis process which is equal to or larger than the first threshold value (the predetermined rate) and the first region (the quasi-specific range) having the accuracy of the analysis process which is equal to or larger than the second threshold value which is smaller than the first threshold value in the same display form. In this case, the user may easily recognize different human-body detection available regions for different accuracies in one display screen.

Furthermore, the image processing apparatus 200 may display a user interface to be used by the user to specify a region to be subjected to the analysis process in the image. Then the image processing apparatus 200 may perform the analysis process on the region specified by the user through the user interface. Here, the region to be subjected to the analysis process described above may correspond to the human-body detection process region to be subjected to the human-body detection process. In this way, the user may specify the human-body detection process region after checking the human-body detection available region displayed by the image processing apparatus 200, and therefore, a region in which the human-body detection process may not appropriately performed is prevented from being set as the human-body detection process region. That is, the image processing apparatus 200 may perform the human-body detection process on a region in which the human-body detection process may be appropriately performed.

As described above, according to this embodiment, in the case where the user sets the imaging condition and the parameters for the analysis process, the user may easily check whether the settings are appropriate for the analysis process. Therefore, it is not necessary for the user to repeatedly perform control of an angle of view in accordance with a result of the analysis process actually performed by the image processing apparatus 200 so that the analysis process is appropriately performed. Furthermore, a skill of the user in which an angle of display of the object is actually measured, the first region in which the analysis process may be performed is estimated in the captured image, and a region to be subjected to the analysis process is set in the estimated range is not required. In this way, the image processing apparatus 200 may easily assist the user who performs settings for performing an appropriate analysis process on an image. Accordingly, the user may easily perform settings for appropriately performing the analysis process, and labor saving is realized.

### Second Embodiment

A second embodiment of the present invention will now be described.

In the first embodiment, the case where only the human-body detection available region of one camera is displayed on the captured image in the superimposing manner is described. In a second embodiment, a case where a plurality of human-body detection available regions of a plurality of cameras are displayed on a captured image in a superimposing manner will be described. Specifically, in the second embodiment, human-body detection available regions of a plurality of cameras are displayed in the same screen.

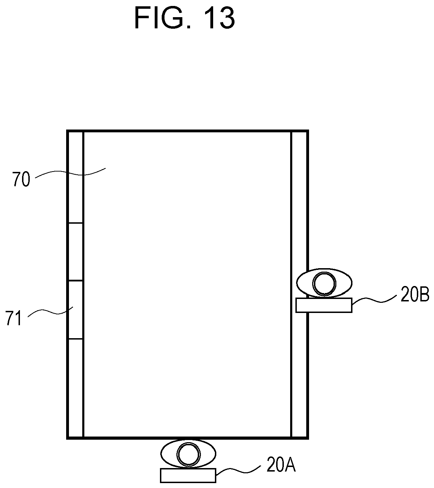

Fig. 13 is a plan view illustrating installation of a plurality of cameras. In Fig. 13, two cameras 20A and 20B are installed in a monitoring space (a shop, for example) 70. A network connection configuration and an internal configuration of the cameras 20A and 20B are the same as those of the camera 20 according to the first embodiment described above (refer to Figs. 1 and 2).

The camera 20A is installed in a state in which a door 71 installed in the shop 70 is positioned on a left side of the camera 20A, an imaging direction corresponds to an upper direction of Fig. 13, and a certain range is captured at an certain angle (a shallow angle) in a direction obliquely downward from a ceiling of the shop 70. The camera 20B is installed in a state in which the door 71 is positioned in front of the camera 20B, an imaging direction corresponds to the left of Fig. 13, and a certain range is captured at a certain angle (a shallow angle) in a direction obliquely downward from the ceiling of the shop 70.

The image processing apparatuses 200 have the configuration illustrated in Fig. 3 described above. However, the second embodiment is different from the first embodiment in that a parameter obtaining unit 210 obtains information on the cameras 20A and 20B. Furthermore, a parameter setting unit 209 calculates human-body detection available regions of the cameras 20A and 20B, and a display controller 211 displays the human-body detection available regions calculated by the parameter setting unit 209 on a captured image in a superimposing manner.

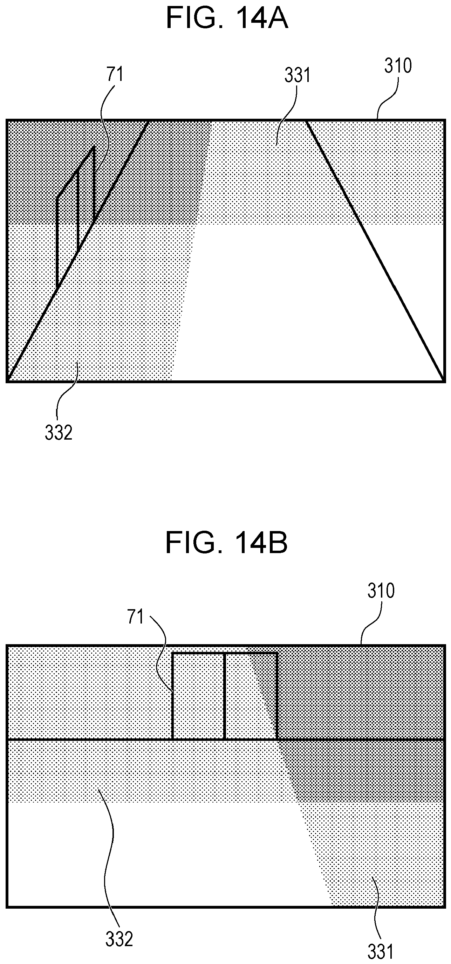

Fig. 14A is a diagram illustrating a video display section 310 which displays human-body detection available regions 331 and 332 of the cameras 20A and 20B on an image captured by the camera 20A in a superimposing manner. In the human-body detection available region 332 of Fig. 14A, an analysis process may be performed on an image captured by the camera 20B included in the image captured by the camera 20A. Furthermore, Fig. 14B is a diagram illustrating a video display section 310 which displays the human-body detection available regions 331 and 332 on the image captured by the camera 20B in a superimposing manner. In the human-body detection available region 331 of Fig. 14B, an analysis process may be performed on the image captured by the camera 20A included in the image captured by the camera 20B.

A method for calculating the human-body detection available regions 331 and 332 is the same as that of the first embodiment. The parameter setting unit 209 calculates a region in which a human-body detection process may be performed on the image captured by the camera 20A included in the image captured by the camera 20A in accordance with a horizontal angle and a vertical angle of view, and an effective range of a human-body detection process of the camera 20A. Furthermore, the parameter setting unit 209 calculates a region in which the human-body detection process may be performed on the image captured by the camera 20B included in the image captured by the camera 20B in accordance with a horizontal angle and a vertical angle of view, and an effective range of the human-body detection process of the camera 20B.

Then, in the case where the human-body detection available regions 331 and 332 of the cameras 20A and 20B are displayed on the image captured by the camera 20A in a superimposing manner, the display controller 211 performs a process of converting the human-body detection available region 332 of the camera 20B into a region on the image captured by the camera 20A. Similarly, in the case where the human-body detection available regions 331 and 332 of the cameras 20A and 20B are displayed on the image captured by the camera 20B in a superimposing manner, the display controller 211 performs a process of converting the human-body detection available region 331 of the camera 20A into a region on the image captured by the camera 20B. The process of converting a human-body detection available region will now be described.

For mutual conversion of regions, the correspondence relationships between arbitrary points on the images captured by the cameras 20A and 20B and a point at a center of a floor surface in Fig. 13, for example, are obtained. Since the correspondence relationships have the relationship of perspective projection conversion, if positions of the arbitrary points on the captured image are obtained in the plan view of Fig. 13, points on the floor surface may be converted between the cameras 20A and 20B.

Specifically, it is assumed that four points A, B, C, and D are marked on an actual floor surface in the shop 70, and the surface of the floor is captured by the camera 20A. Thereafter, the image processing apparatus 200 displays an image captured by the camera 20A in a display unit of an information processing apparatus 30. When a user selects the four points included in the captured image displayed in the display unit on a display screen, the image processing apparatus 200 obtains coordinates of the four points included in the captured image in accordance with positional information on the display screen of the four points selected by the user. Subsequently, the image processing apparatus 200 obtains positions of the four points on the plan view of Fig. 13. First, the user actually measures actual distances among the marked points and inputs the actually measured distances to the image processing apparatus 200 through a user interface. Then the image processing apparatus 200 converts the distances input by the user into distances on the plan view based on a scale of the plan view. By this, positions of four points A' to D' in the plan view corresponding to the four points A to D on the image captured by the camera 20A are obtained.

When the correspondences between the four points A to D on the image captured by the camera 20A and the four points A' to D' on the plan view are obtained, projection conversion or reverse conversion of the projection conversion may be performed between the points on the image captured by the camera 20A and the points on the plan view. The process described above is performed by the image processing apparatus 200 when the camera 20A is installed, and obtained conversion parameters are stored in the camera 20A as conversion information. Similarly, also in a case of the camera 20B, the image processing apparatus 200 obtains correspondence relationships between arbitrary points on the image captured by the camera 20B with points on the plan view, and stores conversion parameters in the camera 20B as conversion information. The process described above is performed only once at a time of installation of the cameras 20A and 20B, and re-measurement is not required as long as angles of view or directions of the cameras 20A and 20B are not changed. The display controller 211 may perform region conversion between the cameras 20A and 20B using the conversion information.

Note that a method for generating the conversion information is not limited to the method for obtaining the correspondence relationships between the points on the image captured by the cameras 20A and 20B and the points on the plan view. For example, the conversion information may be generated using information on angles of view obtained from lens characteristics and zoom position settings of the cameras 20A and 20B, installation positions of the cameras 20A and 20B, and information on heights and installation angles.

Furthermore, a storage location of the conversion information is not limited to a portion included in the camera 20A or the camera 20B. The conversion information may be stored in another information processing apparatus connected to a network so that the cameras 20A and 20B obtain the conversion information from the information processing apparatus, for example. Alternatively, the conversion information of all cameras included in the network camera system 10 may be stored in a predetermined processing apparatus in advance.

Furthermore, although the parameter obtaining unit 210 of the camera 20A obtains various information on the camera 20B and the display controller 211 of the camera 20A displays the human-body detection available region, this display control process may be performed any apparatus. For example, the display control process may be performed such that another information processing apparatus receives a plurality of camera information including information on the cameras 20A and 20B through the network and calculates the human-body detection available regions.

As described above, according to this embodiment, the image processing apparatus 200 displays human-body detection available regions of a plurality of cameras in the same screen. Specifically, the image processing apparatus 200 obtains a second region which is included in a first image captured by a first imaging apparatus and which may be subjected to the analysis process performed on an object included in a second image captured by a second imaging apparatus which is different from the first imaging apparatus. Then the image processing apparatus 200 combines and displays the first and second regions which may be subjected to the analysis process in the image captured by the first imaging apparatus. Accordingly, the user may easily recognize human-body detection available regions of a plurality of cameras, and missing of a region setting or overlap of setting regions at a time of setting of a human-body detection region may be reduced.

Furthermore, the image processing apparatus 200 obtains information on an imaging range of the second imaging apparatus when the second region is obtained. Here, the image processing apparatus 200 obtains a region in which the analysis process may be performed on an object included in the second image in the second image captured by the second imaging apparatus in accordance with information on the imaging range of the second imaging apparatus and information on an effective range of the analysis process. Then the image processing apparatus 200 obtains the second region by converting the obtained region in which the analysis process may be performed on an object into a region included in the image captured by the first imaging apparatus. In this way, since the human-body detection available region included in the image captured by the camera 20B is converted into a region included in the image captured by the camera 20A, the human-body detection available regions of the cameras 20A and 20B may be appropriately displayed in one screen.

According to the configuration of this embodiment, the image processing apparatus 200 may easily assist the user who performs settings for performing an appropriate analysis process on an image.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments.

## Claims

1. A display control apparatus comprising:
obtaining means (210) configured to obtain direction information indicating an imaging direction of an imaging apparatus;
determination means (209) configured to determine, in an image captured by the imaging apparatus, a specific range suitable for setting as a detection region in which a detection process is to be performed on a specific object in accordance with the direction information; and
display control means (211) configured to display an image indicating the specific range on a display screen.

2. The display control apparatus according to claim 1,
wherein the obtaining means (210) is configured to obtain information on an angle of view indicating an imaging angle of view of the imaging apparatus, and
the determination means (209) is configured to determine the specific range in accordance with the direction information and the information on an angle of view.

3. The display control apparatus according to claim 1,
wherein the determination means (209) is configured to determine the specific range and a quasi-specific range in accordance with the direction information,
the display control means (211) is configured to display the specific range and the quasi-specific range on the display screen, and
a detection rate of the specific object is equal to or larger than a first threshold value in the specific range, and a detection rate of the specific object is equal to or larger than a second threshold value which is smaller than the first threshold value in the quasi-specific range.

4. The display control apparatus according to claim 1, further comprising:
accepting means (26) configured to accept designation of the detection region,
wherein the display control means (211) is configured to display a predetermined message on the display screen in a case where a position of the detection region accepted by the accepting means (26) is out of the specific range determined by the determination means (209).

5. The display control apparatus according to claim 3,
wherein the display control means (211) is configured to display the specific range and the quasi-specific range in different display forms.

6. The display control apparatus according to claim 3,
wherein the display control means (211) is configured to display the specific range and the quasi-specific range in the same display form.

7. The display control apparatus according to claim 5,
wherein the display forms indicate at least one of colors indicating the specific range and the quasi-specific range, types of frame lines indicating the specific range and the quasi-specific range, and thicknesses of the frame lines indicating the specific range and the quasi-specific range.

8. A display control method comprising:
obtaining direction information indicating an imaging direction of an imaging apparatus;
determining, in an image captured by the imaging apparatus, a specific range suitable for a setting of a detection region in which a detection process is to be performed on a specific object in accordance with the obtained information indicating the imaging direction of the imaging apparatus; and
displaying an image indicating the determined specific range on a display screen.

9. The display control method according to claim 8, further comprising:
obtaining information on an angle of view indicating an imaging angle of view of the imaging apparatus,
wherein the specific range is determined in accordance with the obtained direction information and the obtained information on an angle of view.

10. The display control method according to claim 8, further comprising:
determining a quasi-specific range having a detection rate of the specific object which is lower than a detection rate of the specific range in accordance with the direction information,
wherein the determined specific range and the determined quasi-specific range are displayed on the display screen, and
a detection rate of the specific object is equal to or larger than a first threshold value in the specific range, and a detection rate of the specific object is equal to or larger than a second threshold value which is smaller than the first threshold value in the quasi-specific range.

11. The display control method according to claim 8, further comprising:
accepting designation of the detection region; and
displaying a predetermined message on the display screen in a case where a position of the detection region is out of the determined specific range.

12. A program that, when executed by a display control apparatus, causes the display control apparatus to perform a method according to any of claims 8 to 11.
